# EUROPÄISCHE PATENTSCHRIFT

(11) **EP 2 406 607 B1**
(45) Veröffentlichungstag und Bekanntmachung des Hinweises auf die Patenterteilung: **31.07.2013**
(21) Anmeldenummer: 10712377.0
(22) Anmeldetag: 13.03.2010
(51) Int. Cl.: G01K 7/18, H01K 1/18, H05B 3/26, H05B 3/00, G01J 3/10

(54) **INFRAROTSTRAHLERANORDNUNG FÜR EIN GASANALYSENGERÄT**
INFRARED RADIATOR DEVICE FOR A GAS ANALYSER
DISPOSITIF DE RAYONNEMENT INFRAROUGE POUR ANALYSEUR DE GAZ

(30) Priorität: 13.03.2009 DE 102009013096
(43) Veröffentlichungstag der Anmeldung: 18.01.2012
(73) Patentinhaber: Siemens Aktiengesellschaft, 80333 München (DE)
(72) Erfinder: BITTER, Ralf, 76139 Karlsruhe (DE); HEFFELS, Camiel, 76297 Stutensee-Büchig (DE); HÖRNER, Thomas, 76135 Karlsruhe (DE)
(86) Internationale Anmeldenummer: PCT/EP2010/053237
(87) Internationale Veröffentlichungsnummer: WO 2010/103123

(56) Entgegenhaltungen:
- EP-A1- 0 177 724
- EP-A1- 1 168 418
- EP-A1- 1 679 735
- WO-A1-97/06417
- DE-A1- 1 936 245
- DE-A1- 4 420 340
- JP-A- 9 153 640
- US-A- 4 620 104

## Beschreibung

Die Erfindung betrifft eine Infrarotstrahleranordnung für ein Gasanalysengerät, bestehend aus einem Strahlergehäuse, in dessen einseitig mit einem strahlungsdurchlässigen Fenster abgeschlossenen Innenraum ein plattenförmiger Keramikkörper angeordnet ist, auf dem eine strukturierte Heizwiderstandsschicht aufgebracht ist.

Als breitbandige Strahlungsquelle für die Infrarot-Gasanalyse werden üblicherweise Widerstandsstrahler verwendet, bei denen in einem mit einem strahlungsdurchlässigen Fenster, z. B. CaF₂-IR-Fenster, abgeschlossenen Reflektorgehäuse ein Glühwendel angeordnet ist. Das Gehäuse ist mit einem Schutzgas, z. B. N₂, gefüllt, um chemische Reaktionen des Glühwendels mit Umgebungsluft zu vermeiden. Es können auch andere Gase, z. B. O₂, Verwendung finden, um auf dem Glühwendel eine Schutzschicht, z. B. Oxidschicht, zu erzeugen.

Inzwischen sind auch planare Strahlungsquellen bekannt geworden, bei denen eine strukturierte Heizwiderstandsschicht in Dick- oder Dünnfilmtechnik direkt auf einem strahlungsdurchlässigen Fenster (z. B. US4620104) oder auf einem in einem Strahlergehäuse angeordneten Keramikträger ausgebildet sind (DE1936245, DE4420340).

Die Erfindung geht von einer Infrarotstrahleranordnung der letztgenannten Art aus.

Bei der aus der DE1936245 bekannten Anordnung ist die Heizwiderstandsschicht auf der Vorderseite eines rechteckförmigen Keramikplättchens aufgedampft, auf dessen Rückseite ein Platinwiderstandsthermometer aufgedampft, aufgekittet oder aufgesintert ist. Das Keramikplättchen wird von den Anschlüssen für die Heizwiderstandsschicht und das Platinwiderstandsthermometer getragen, welche durch die rückwärtige Wand des Strahlergehäuses herausführen.

Bei der aus der DE4420340 bekannten Anordnung ist die Heizwiderstandsschicht in Dickfilmtechnik als Paste, z. B. Pt-Paste, auf der Vorderseite eines ebenfalls rechteckförmigen AlN-Substrats in Schlangen aufgedruckt und anschließend gebacken. Auf der Rückseite des Keramiksubstrats ist ein Thermosensor in Form eines Thermopaares aufgebracht. Wie das Keramiksubstrat in dem Strahlergehäuse gehalten ist, geht aus der DE4420340 nicht hervor.

Der Erfindung liegt die Aufgabe zugrunde, eine sichere und exakt definierte Halterung des Keramikkörpers mit der darauf aufgebrachten Heizwiderstandsschicht zu gewährleisten.

Gemäß der Erfindung wird die Aufgabe dadurch gelöst, dass bei der Anordnung der eingangs angegebenen Art der plattenförmige Keramikkörper als gleichseitige Dreiecksplatte ausgebildet ist, die mit ihren Dreiecksspitzen an dem Innenumfang des Strahlergehäuses gehalten ist. Die Dreiecksspitzen sind nicht notwendigerweise spitz, sondern können abgerundet oder abgeflacht sein.

Durch die Dreipunktlagerung ergibt sich eine sichere und genau definierte Halterung des Keramikkörpers in dem Strahlergehäuse. Dabei ist die Dreiecksplatte vorzugsweise an ihren Dreiecksspitzen in einer in dem Innenumfang des Strahlergehäuses ausgebildeten Umlaufnut gehalten. Alternativ können durch lokal an der Gehäuseinnenwand ausgebildete Ansätze oder Ausnehmungen oder durch dort vorgesehene Federelemente Mittel zur Aufnahme der Dreiecksspitzen geschaffen werden.

Ein weiterer Vorteil der erfindungsgemäßen Anordnung besteht darin, dass durch die Dreipunktlagerung der Wärmeabfluss von dem Keramikkörper zu dem Strahlergehäuse minimiert ist. Dies ermöglicht es, die Heizwiderstandsschicht und, wenn vorhanden, weitere, beispielsweise zur Temperaturmessung dienende Widerstandsschichten im Bereich der Dreiecksspitzen der Dreiecksplatte durch Lötverbindungen mit Anschlussleitungen zu verbinden. Alternative Verbindungsverfahren sind z. B. Ansintern oder Schweißen.

Um die Temperatur- und damit die Spannungsverteilung innerhalb der Dreiecksplatte, insbesondere im Bereich ihrer Kanten zu verbessern, sind Teilstrukturen der Heizwiderstandsschicht entlang den Kanten der Dreiecksplatte und in Nähe zu diesen ausgebildet. Diese Teilstrukturen können beispielsweise geradlinig parallel zu den Kanten oder mäanderförmig im Bereich zwischen den Kanten und den übrigen Strukturen der Heizwiderstandsschicht im inneren Bereich der Dreiecksplatte verlaufen.

Da der Keramikkörper an seinen Kanten nur einseitig beheizt wird, entsteht dort ein Wärmeabfluss. Daher weisen die Teilstrukturen der Heizwiderstandsschicht entlang den Kanten vorzugsweise einen höheren elektrischen Widerstand als die übrigen Strukturen der Heizwiderstandsschicht auf, so dass an den Kanten eine stärkere ohmsche Erwärmung stattfindet. Der höhere elektrische Widerstand kann beispielsweise durch einen verringerten Leitungsquerschnitt oder durch Dotieren der Heizwiderstandsschicht realisiert werden.

Aufgrund der Dreiecksform des Keramikkörpers ergeben sich Öffnungen zwischen seinen Kanten und der Innenwand des Strahlergehäuses. Um auch von der dem Fenster abgewandten Seite des Keramikkörpers ausgehende Strahlungsanteile durch die Öffnungen hindurch zu dem Fenster zu leiten, kann das Strahlergehäuse auf seiner dem Fenster gegenüberliegenden Innenseite einen geeignet ausgebildeten Reflektor aufweisen.

Schließlich lässt sich der dreieckförmige Keramikkörper auf einfache Weise in größerer Stückzahl aus einem großflächigen Keramiksubstrat herstellen, indem durch Ritzen oder Laserperforieren entlang von parallelen Linien in drei um jeweils 60° gegeneinander verdrehten Richtungen Sollbruchlinien in das Keramiksubstrat eingebracht werden, an denen durch Brechen die einzelnen Keramikkörper vereinzelt werden. Die Kanten der Dreiecksplatte stellen dann Bruchkanten dar.

Zur Temperaturmessung und -regelung kann in bekannter Weise der Widerstand der Heizwiderstandsschicht oder weiterer Widerstandsschichten gemessen werden. Alterungsbedingte Veränderungen des Widerstands können jedoch trotz Regelung auf einen gleichbleibenden Widerstandswert zu unterschiedlichen Temperaturen und damit unterschiedlichen Intensitätsspektren der erzeugten Strahlung führen. Solche alterungsbedingten Veränderungen der Widerstandsschicht können durch eine redundante Temperaturerfassung mittels mindestens zweier Widerstandsstrukturen mit unterschiedlichem Temperaturverhalten detektiert werden. Das unterschiedliche Temperaturverhalten kann beispielsweise durch entsprechendes Dotieren der Widerstandsschicht eingestellt werden.

Zur weiteren Erläuterung der Erfindung wird im Folgenden auf die Figuren der Zeichnung Bezug genommen; im Einzelnen zeigen:
- Figur 1: ein Ausführungsbeispiel der erfindungsgemäßen Infrarotstrahleranordnung im Querschnitt mit einem eine Heizwiderstandsschicht tragenden Keramikkörper,
- Figur 2: den Keramikkörper in Draufsicht,
- Figur 3: ein Beispiel für ein Keramiksubstrat mit Sollbruchlinien zur Vereinzelung einer Vielzahl von Keramikkörpern,
- Figur 4: beispielhaft die Widerstands-/Temperatur-Kennlinien zweier Widerstandsstrukturen mit unterschiedlichem Temperaturverhalten und die
- Figuren 5 und 6: Beispiele für den Keramikkörper mit unterschiedlich strukturierten Heizwiderstandsschichten.

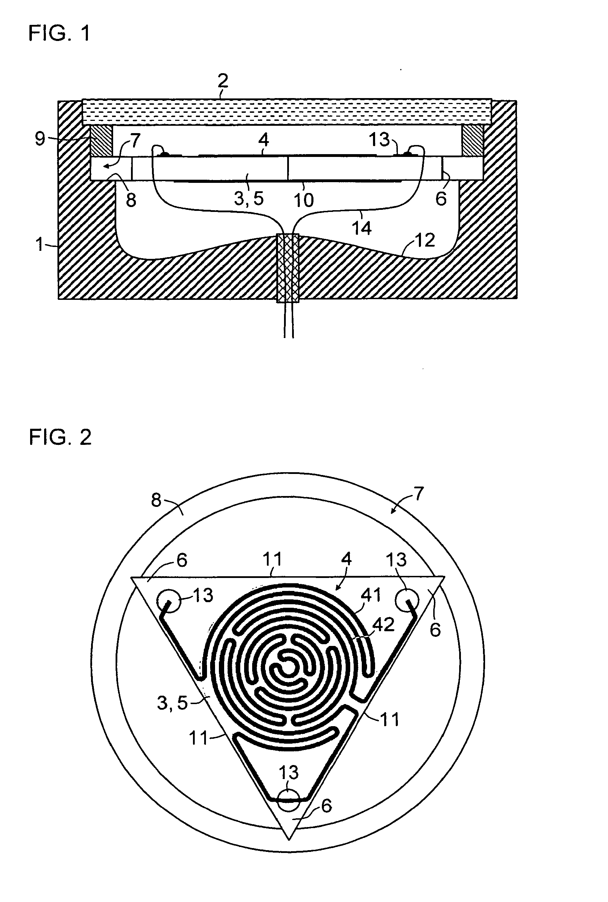

Figur 1 zeigt im Querschnitt eine Infrarotstrahleranordnung mit einem Strahlergehäuse 1, dessen Inneres mit einem infrarotdurchlässigen Fenster 2 abgeschlossen ist. In dem Strahlergehäuse 1 ist ein plattenförmiger Keramikkörper 3 angeordnet, auf dessen dem Fenster 2 zugewandten Seite eine strukturierte Heizwiderstandsschicht 4 aufgebracht ist.

Figur 2 zeigt den Keramikkörper 3 in Draufsicht.

Der Keramikkörper 3 ist in Form einer gleichseitigen Dreiecksplatte 5 ausgebildet, die mit ihren Dreiecksspitzen 6 in einer in dem Innenumfang des Strahlergehäuses 1 ausgebildeten Umlaufnut 7 gehalten ist. Die Nut 7 ist durch eine in dem Strahlergehäuse 1 umlaufende Schulter 8 und einen zwischen dem Fenster 2 und dem Keramikkörper 3 angeordneten Klemmkragen 9 gebildet. Die Heizwiderstandsschicht 4 besteht aus einer mittels Siebdruck auf dem Keramikkörper 3 aufgetragenen und anschließend eingebrannten Platinpaste. Es können mehrere Heizstrukturen 41, 42 oder auch Strukturen zur Temperaturerfassung auf einer oder beiden Seiten des Keramikkörpers 3 aufgedruckt werden. Figur 2 zeigt zwei elektrisch in Reihe geschaltete schlangenförmige Heizstrukturen, die beide unabhängig voneinander beheizt und beide zur Temperaturmessung und damit -regelung herangezogen werden können. Alternativ oder ergänzend kann auf der Rückseite des Keramikkörpers 3 eine Platinstruktur 10 zur (redundanten) Temperaturmessung aufgebracht sein.

Die Dreiecksform sorgt für eine stabile Halterung des Keramikkörpers 3 in dem Strahlergehäuse 1. Ferner ergeben sich aufgrund der Dreiecksform Öffnungen zwischen den Kanten 11 des Keramikkörpers 3 und der Innenwand des Strahlergehäuses 1, durch die hindurch von der dem Fenster 2 abgewandten Seite des Keramikkörpers 3 ausgehende Strahlungsanteile über einen Reflektor 12 zu dem Fenster 2 geleitet werden.

Aufgrund der Dreipunktlagerung ist der Wärmeabfluss von dem Keramikkörper 3 zu dem Strahlergehäuse 1 minimiert, wodurch es möglich ist, die Heizwiderstandsschicht 4 und weitere Widerstandsschichten 10 im Bereich der Dreiecksspitzen 6 der Dreiecksplatte 5 an Kontaktflächen 13 durch Lötverbindung mit Anschlussleitungen 14 zu verbinden, die auf der Rückseite des Strahlergehäuses 1 aus diesem herausgeführt sind.

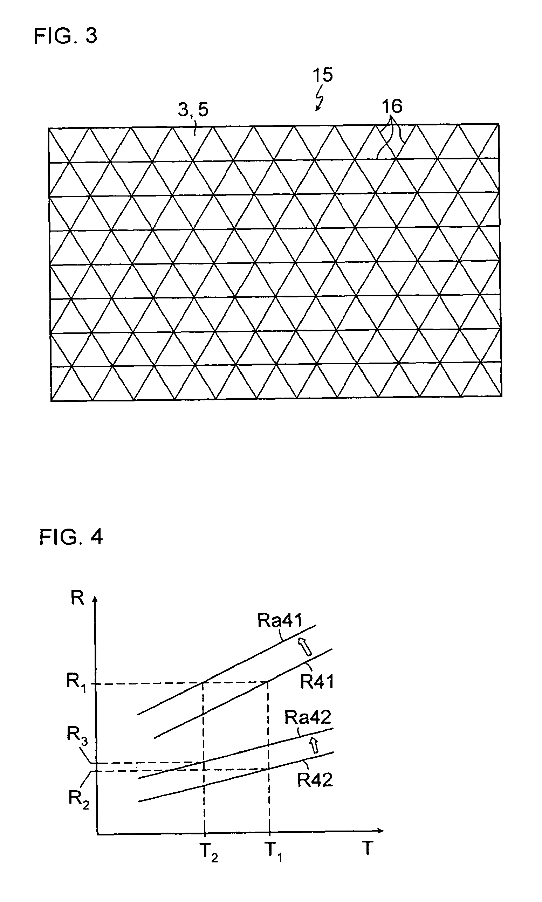

Figur 3 zeigt ein großflächiges Keramiksubstrat 15, aus dem sich der dreieckförmige Keramikkörper 3 auf einfache Weise in größerer Stückzahl herstellen lässt. Dazu werden in das Keramiksubstrat 15 durch Ritzen oder Laserperforieren entlang von parallelen Linien 16 in drei um jeweils 60° gegeneinander verdrehten Richtungen Sollbruchlinien eingebracht, an denen die einzelnen Keramikkörper 3 durch Brechen vereinzelt werden. Die Kanten 11 der Dreiecksplatte 5 stellen dann Bruchkanten dar.

Figur 4 zeigt schließlich die Widerstands-/Temperatur- (R/T) Kennlinien R41 und R42 zweier Widerstandsstrukturen, hier 41 und 42 aus Figur 2, mit unterschiedlichem Temperaturverhalten, das z. B. durch Dotieren einer oder unterschiedliches Dotieren beider Widerstandsstrukturen erreicht wird. Durch Alterung ändert sich die Kennlinie R41 in Ra41 und die Kennlinie R42 in Ra42. Die Widerstandsstruktur 41 wird widerstandsgeregelt auf eine Temperatur T₁ erhitzt, wobei der Widerstandssollwert R₁ beträgt. Bei dieser Temperatur T₁ wird an der Widerstandsstruktur 42 der Widerstandswert R₂ gemessen. Nach Alterung der Widerstandsstrukturen 41 und 42 führt die unverändert erfolgende Regelung der Widerstandsstruktur 41 auf den Widerstandswert R₁ zu einer unerwünscht verminderten Temperatur T₂. Bei dieser Temperatur T₂ wird aber an der Widerstandsstruktur 42 aufgrund des anderen Temperaturverhaltens nicht der ursprüngliche Widerstandswert R₂, sondern ein veränderter Widerstandswert R₃ gemessen, was auf eine alterungsbedingte Widerstandsänderung der Widerstandsstrukturen 41 und 42 und eine falsch eingestellte Temperatur hinweist.

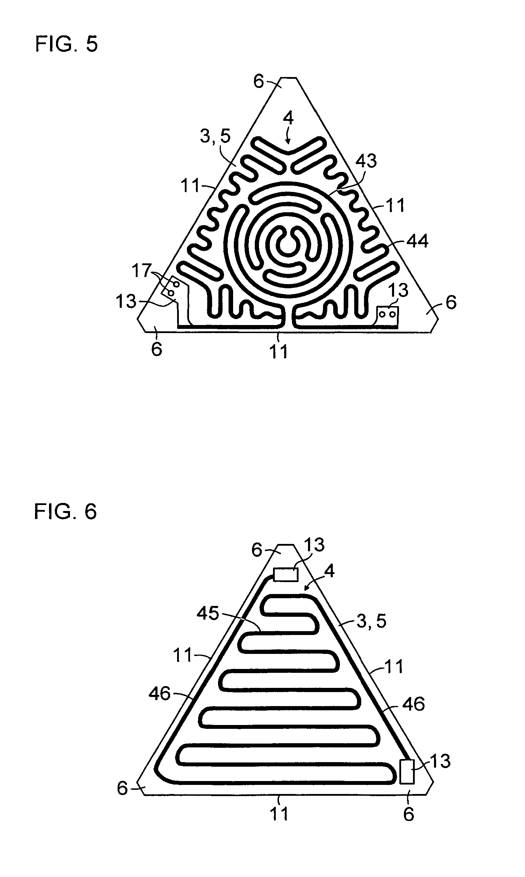

Figur 5 zeigt den Keramikkörper 3 in Form der gleichseitigen Dreiecksplatte 5 mit hier abgeflachten Dreiecksspitzen 6. Die Heizwiderstandsschicht 4 besteht aus einer inneren Teilstruktur 43 ähnlich der Heizstruktur 42 in Figur 2 und aus einer äußeren Teilstruktur 44, die mäanderförmig in den Bereichen zwischen den Kanten 11 der Dreiecksplatte 5 und der inneren Teilstruktur 43 der Heizwiderstandsschicht 4 verläuft. Dadurch wird erreicht, dass mit Ausnahme der Dreiecksspitzen 6 alle Regionen der Dreiecksplatte 5 gleichmäßig beheizt werden.

In den Kontaktflächen 13 sind jeweils zwei kleine Löcher 17 vorgesehen, um darin die Anschlussdrähte 14 (Figur 1) einzuhängen, bevor sie angesintert werden. Dadurch werden die gesinterten Kontaktstellen mechanisch entlastet.

Bei dem in Figur 6 gezeigten Ausführungsbeispiel besteht die Heizwiderstandsschicht 4 aus einer inneren Teilstruktur 45, die über die Fläche der Dreiecksplatte 5 mäanderförmig verläuft, und aus einer äußeren Teilstruktur 46, in Form von geradlinig parallel zu den Kanten 11 verlaufenden Zuleitungen der inneren Teilstruktur 45. Da der Keramikkörper 3 an seinen Kanten 11 nur einseitig beheizt wird, entsteht dort ein Wärmeabfluss. Daher ist die äußere Teilstruktur 46 der Heizwiderstandsschicht 4 hochohmiger als die innere Teilstruktur 45 ausgebildet.

## Patentansprüche

1. Infrarotstrahleranordnung für ein Gasanalysengerät, bestehend aus einem Strahlergehäuse (1), in dessen einseitig mit einem strahlungsdurchlässigen Fenster (2) abgeschlossenen Innenraum ein plattenförmiger Keramikkörper (3) angeordnet ist, auf dem eine strukturierte Heizwiderstandsschicht (4) aufgebracht ist, **dadurch gekennzeichnet, dass** der plattenförmige Keramikkörper (3) als gleichseitige Dreiecksplatte (5) ausgebildet ist, die mit ihren Dreiecksspitzen (6) an dem Innenumfang des Strahlergehäuses (1) gehalten ist.

2. Infrarotstrahleranordnung nach Anspruch 1, **dadurch gekennzeichnet, dass** die Dreiecksplatte (5) an ihren Dreiecksspitzen (6) in einer in dem Innenumfang des Strahlergehäuses (1) ausgebildeten Umlaufnut (7) gehalten ist.

3. Infrarotstrahleranordnung nach Anspruch 1 oder 2, **dadurch gekennzeichnet, dass** die Heizwiderstandsschicht (4) und, wenn vorhanden, weitere Widerstandsschichten (10) im Bereich der Dreiecksspitzen (6) der Dreiecksplatte (5) mit Anschlussleitungen (14) verbunden sind.

4. Infrarotstrahleranordnung nach einem der vorangehenden Ansprüche, **dadurch gekennzeichnet, dass** Teilstrukturen (44, 46) der Heizwiderstandsschicht (4) entlang den Kanten (11) der Dreiecksplatte (5) und in Nähe zu diesen ausgebildet sind.

5. Infrarotstrahleranordnung nach Anspruch 4, **dadurch gekennzeichnet, dass** Teilstrukturen (44, 46) der Heizwiderstandsschicht (4) entlang den Kanten (11) einen höheren elektrischen Widerstand als die übrigen Strukturen der Heizwiderstandsschicht (4) aufweisen.

6. Infrarotstrahleranordnung nach einem der vorangehenden Ansprüche, **dadurch gekennzeichnet, dass** das Strahlergehäuse (1) auf seiner dem strahlungsdurchlässigen Fenster (2) gegenüberliegenden Innenseite einen Reflektor (12) aufweist.

7. Infrarotstrahleranordnung nach einem der vorangehenden Ansprüche, **dadurch gekennzeichnet, dass** die Kanten (11) der Dreiecksplatte (5) Bruchkanten darstellen.

8. Infrarotstrahleranordnung nach einem der vorangehenden Ansprüche, **dadurch gekennzeichnet, dass** zur redundanten Temperaturerfassung auf dem Keramikkörper (3) mindestens zwei Widerstandsstrukturen (41, 42) mit unterschiedlichem Temperaturverhalten aufgebracht sind.

## Claims

1. Infrared radiator arrangement for a gas analysis device, consisting of a radiator housing (1), with a plate-shaped ceramic body (3) on which a structured heating resistance layer (4) is applied being arranged in the interior of said housing, which interior is closed off on one side by a radiation-transmissive window (2), **characterized in that** the plate-shaped ceramic body (3) is embodied as an equilateral triangular plate (5), which is mounted on the internal circumference of the radiator housing (1) using its triangle tips (6).

2. Infrared radiator arrangement according to Claim 1, **characterized in that** the triangular plate (5) is mounted at its triangle tips (6) in a circumferential groove (7) embodied in the internal circumference of the radiator housing (1).

3. Infrared radiator arrangement according to Claim 1 or 2, **characterized in that** the heating resistance layer (4) and, if present, further resistance layers (10) are connected to connection lines (14) in the region of the triangle tips (6) of the triangular plate (5).

4. Infrared radiator arrangement according to one of the preceding claims, **characterized in that** partial structures (44, 46) of the heating resistance layer (4) are embodied along the edges (11) of the triangular plate (5) and in the vicinity of the latter.

5. Infrared radiator arrangement according to Claim 4, **characterized in that** partial structures (44, 46) of the heating resistance layer (4) have a higher electric resistance along the edges (11) than the remaining structures of the heating resistance layer (4).

6. Infrared radiator arrangement according to one of the preceding claims, **characterized in that** the radiator housing (1) has a reflector (12) on its inner side lying opposite the radiation-transmissive window (2).

7. Infrared radiator arrangement according to one of the preceding claims, **characterized in that** the edges (11) of the triangular plate (5) are breaking edges.

8. Infrared radiator arrangement according to one of the preceding claims, **characterized in that** at least two resistor structures (41, 42) with different temperature properties are applied on the ceramic body (3) for redundant temperature acquisition.

## Revendications

1. Dispositif à source de rayonnement infrarouge pour un appareil d'analyse des gaz consistant en un boîtier ( 1 ) de source de rayonnement, à l'intérieur duquel, fermé d'un côté par un hublot ( 2 ) transparent au rayonnement, est disposé un corps ( 3 ) en céramique en forme de plaque, sur lequel est déposée une couche ( 4 ) structurée de résistance de chauffage, **caractérisé en ce que** le corps ( 3 ) en céramique en forme de plaque est constitué en plaque ( 5 ) sous la forme d'un triangle équilatéral, qui est maintenu sur le pourtour intérieur du boîtier ( 1 ) de la source de rayonnement par ses sommets ( 6 ) du triangle.

2. Dispositif à source de rayonnement infrarouge suivant la revendication 1, **caractérisé en ce que** la plaque ( 5 ) triangulaire est maintenue sur ses sommets ( 6 ) du triangle dans une rainure ( 7 ) faisant le tour et formée dans le pourtour intérieur du boîtier ( 1 ) de la source de rayonnement.

3. Dispositif à source de rayonnement infrarouge suivant la revendication 1 ou 2, **caractérisé en ce que** la couche ( 4 ) de résistance de chauffage et, si elles sont présentes, d'autres couches ( 10 ) de résistance sont reliées à des lignes ( 14 ) de connexion dans la région des sommets ( 6 ) du triangle de la plaque ( 5 ) triangulaire.

4. Dispositif à source de rayonnement infrarouge suivant l'une des revendications précédentes, **caractérisé en ce que** des sous-structures ( 44, 46 ) de la couche ( 4 ) de résistance de chauffage sont formées le long des bords ( 11 ) de la plaque ( 5 ) triangulaire et à proximité de ceux-ci.

5. Dispositif à source de rayonnement infrarouge suivant la revendication 4, **caractérisé en ce que** des sous-structures ( 44, 46 ) de la couche ( 4 ) de résistance de chauffage ont, le long des bords ( 11 ), une résistance électrique plus grande que les autres structures de la couche ( 4 ) de résistance de chauffage.

6. Dispositif à source de rayonnement infrarouge suivant l'une des revendications précédentes, **caractérisé en ce que** le boîtier ( 1 ) de la source de rayonnement a un réflecteur ( 12 ) sur son côté intérieur faisant face au hublot ( 2 ) transparent au rayonnement.

7. Dispositif à source de rayonnement infrarouge suivant l'une des revendications précédentes, **caractérisé en ce que** les bords ( 11 ) de la plaque ( 5 ) triangulaire constituent des bords coupés.

8. Dispositif à source de rayonnement infrarouge suivant l'une des revendications précédentes, **caractérisé en ce que**, pour la détection redondante de la température, il est déposé sur le corps ( 3 ) en céramique au moins deux structures ( 41, 42 ) de résistance ayant un comportement différent à la température.
